# EUROPEAN PATENT APPLICATION

(11) **EP 2 992 959 A1**
(43) Date of publication of application: **09.03.2016**
(21) Application number: 15179273.6
(22) Date of filing: 31.07.2015
(51) Int. Cl.: B01L 3/00, G01N 35/00

(54) **PORTABLE SYSTEM FOR IN SITU GENETIC ANALYSIS**

(30) Priority: 04.09.2014 IT MI20141541
(71) Applicant: Bionat Italia S.r.l., 90144 Palermo (PA) (IT)
(72) Inventor: Drago, Sandro, 90144 Palermo PA (IT); Spoto, Guido, 90144 Palermo PA (IT); Stampone, Giuseppe, 90144 Palermo PA (IT)
(74) Representative: Asensio, Raffaella Consuelo

(57) **Abstract**

The object of the present disclosure is a system (1) for genetic analyses comprising at least one kit (2) and a plurality of devices (3) used by a user (4) for executing a genetic analysis of at least one sample, the system (1) comprises a container (5) shaped for housing at least one kit (2) and the plurality of devices (3) in order to allow the execution of the genetic analysis of at least one sample, the at least one kit (2) comprises an RFID tag (22) containing stored information data representative of a plurality of steps necessary for executing the genetic analysis, the system (1) comprises a processing device (6) arranged inside the container (5) and provided with a graphic interface (7) in order to interact with the user (4) by means of a graphic display, the system (1) comprises at least one sensor (8) arranged inside the container (5) and configured for detecting a first physical quantity relative to the genetic analysis and for transducing it into a first signal (S) in a manner so as to transmit the first signal (S) to the processing device (6), the processing device (6) is configured for displaying the plurality of steps by means of the graphic interface unit (7) and for processing the first signal (S) in order to generate, by means of the graphic interface (7), a first message for proceeding with the execution of the plurality of steps.

## Description

### FIELD OF APPLICATION

The object of the present description is a system for executing genetic analyses in the field and the relative use methodology.

In particular, the present description refers to a system that allows a non-specialized operator to be able to execute genetic analyses in the field.

### Description of the prior art

Known in the state of the art is the use of devices which allow a specialized operator, such as a biotechnologist, to obtain genetic analyses in a specialized laboratory. In the scope of molecular biology, genetic analyses are conducted within specialized laboratories in order to allow qualified operators to be able to safety execute all the procedures for the analysis of genetic material (DNA and RNA).

Genetic analyses, carried out with molecular biology techniques, are increasingly used in different areas and fields, such as in the agro-industrial field for verifying the varietal authenticity of plants and of types of animal raw materials used for obtaining finished products. Genetic analyses are also employed in the health field for the diagnosis of genetically determined diseases, and in the veterinary field for detecting microorganisms responsible for pathologies in animals and for recognizing animal species.

It is opportune to specify that the procedures in use, through which it is possible to execute genetic analyses, are characterized by the execution of obligatory operations. In particular, all the genetic analysis procedures known at the state of the art include three obligatory steps: a) a first step for extracting the nucleic acid (DNA or RNA) from a sample, b) a second step for amplifying the extracted nucleic acid, c) a third step for detecting and interpreting the result. It is opportune to specify that all the devices necessary for executing the genetic analyses are present in any specialized laboratory, while the necessary reagents and materials are available on the market, sometimes integrated and proposed in the form of a laboratory kit for executing a specific genetic analysis. By way of example, the kit can be considered for executing a genetic analysis in order to determine a pathology.

In detail, step a) for extracting the nucleic acid is executed through the use of reagents which must be preserved at controlled temperature (e.g. less than twenty degrees centigrade or four degrees centigrade), or alternatively ready for use and stable at room temperature. In the latter case, the genetic material extraction operations require only a few minutes and are considerably simplified. The extraction systems are also available on the market in suitable kits for genetic analyses, both in the human field and in agro-industrial field. In the state of the art, the kits for genetic analyses provide that the extraction of the nucleic acid occurs in the laboratory, with the assistance of qualified personnel and devices such as micropipettes, benchtop centrifuges and vortex mixers. The known kits comprise the reagents necessary for executing step a) for extracting the nucleic acid, such reagents comprise for example solutions for the cellular lysis of the sample by means of chemical reaction.

Step b) for amplifying the nucleic acid is carried out by means of polymerase chain reaction technique, also termed PCR, which allows replicating *in vitro* a specific genetic sequence in order to obtain a quantity of genetic material sufficient for detection. The known kits comprise reagents, such as a solution composed of Taq polymerase (enzyme), buffer, nucleotides and magnesium chloride. Such reagents are necessary in order to have the gene amplification reaction by means of PCR. In addition, kits are known which comprise reagents for executing step b) for amplifying the nucleic acid by employing reagents and materials ready for use and stably preserved at room temperature, for example lyophilized and preserved under vacuum. Also step b) for amplifying the nucleic acid must occur in the laboratory, with the assistance of qualified personnel and devices such as micropipettes, mini-centrifuges, thermocyclers and vortex mixers.

Step c) for detecting and interpreting the result provides that the detection of the result can be carried out in various ways, for example through horizontal electrophoresis on agarose gel or, alternatively, by means of detection of the fluorescence emitted by the analyzed sample. In the first case, the known kits comprise for example the precast agarose gel, the electrophoretic run buffer pre-dosed in a bag, the marker of molecular weights, and the interpretation of the results is entrusted to the operator. The detection occurs in the laboratory, through the assistance of qualified personnel and micropipettes, cells and power supplies for electrophoresis, ultraviolet gel readers. As an alternative to the ultraviolet gel readers, a system for stressing and detecting the fluorescence can be employed. In this case, known kits provide that the detection occurs through a fluorescence reader, which is also assigned the task of automatic interpretation of the results.

Known at the state of the art are miniaturized laboratories which use a device in which, due to microfluidic systems (also termed lab-on-chip), particularly fast genetic analyses are conducted. In particular, such microfluidic devices are able to execute the steps a) for extracting the nucleic acid and b) for amplifying the nucleic acid in a semi-automatic and simplified manner. In other words, a specialized operator inserts the materials necessary for the genetic analysis in the device and obtains as result the amplified DNA on which step c) for detecting and interpreting is executed. It should nevertheless be specified that in order to execute such genetic analysis, it is necessary that the microfluidic device be used in the laboratory and in combination with instruments such as pumps, syringes, thermocyclers, microscopes and fluorescence readers. Also in this case, the genetic analysis must be executed by an operator specialized in a laboratory or in a suitable structure.

Also known in the state of the art are automatic devices termed PCR workstations. These are open work platforms containing part of the instrumentation and consumables necessary for executing the genetic tests, structured in a modular manner based on operator needs. These PCR workstations function by means of an automatic dispensing system that distributes, in suitable quantities, the reagents used for carrying out the genetic analyses within suitable tubes. The PCR workstations are also provided with a software, which can be installed in an external PC or on a suitable device (e.g. a touchscreen control panel) that guides the operator in executing the various operative steps operative and allows displaying the functioning state of the instrumentation and possible graphs obtained for the purpose of the genetic test. Also present in the workstation are optical sensors, which verify the work surface before carrying out the various operations by evaluating the presence of consumables and the liquid level of the reagents. The workstations also comprise a bar code reader which recognizes the consumables used by the operator (e.g. tubes, plates, tips) and the samples analyzed. The workstation can also comprise accessories such as a thermoblock which allows cooling and heating the sample or the reagents (between 0-110°C) and a recipient for separately eliminating the solid and liquid waste. Within the workstation, it is possible to automatically perform all the operations necessary for executing a genetic test, from the extraction of the nucleic acid of the nucleic acid to the detection of the final result. The sterility and cleaning of the workstation is assured by the presence of a UV lamp and HEPA filters.

Furthermore, automated systems are known for executing tests by means of PCR, which are only able to process genetic samples previously prepared by means of the above-described step a). In other words, such systems have a container which is accessible by a user in order to insert samples therein that were previously prepared in a laboratory (by means of step a), and such container contains an amplification and reading unit capable of automatically executing only steps b) and c) of the genetic test.

### Problem of the prior art

Currently, genetic analyses are only executed in specialized laboratories, provided with highly qualified personnel and instrumentation, to which it is necessary to send the samples to be analyzed. The costs of the analysis and the wait times for the results, negatively affected by the sample sending times, are in some cases incompatible with industry needs (for example those of agro-industries) which require quick, simple execution. Therefore, companies cannot perform genetic analyses in the field, and it is not possible to obtain results in limited times.

As stated above, there are also miniaturized systems, i.e. microfluidic systems, which due to the small size and to the multiplicity of functions that can be performed on a single chip, are currently identified as miniaturized laboratories. It should be specified that the microfluidic systems can only be employed by specialized personnel in a setting suitable for executing genetic analyses. In addition, microfluidic systems are devices with small size and hence are easy to transport, but in order to be employed for genetic analyses require operating in combination with instruments that are normally only present in a specialized laboratory.

As stated above, there are also the PCR workstations; while rendering all the operations necessary for executing a genetic test completely automatic and controlled, these are also quite bulky and are not adapted to carrying out the tests in situ, requiring an organized structure, like the specialized laboratories, and extensive work spaces. It should be specified that this type of platform requires the presence of a specialized operator for interpreting the results and for selecting the type of operations necessary for executing a genetic test.

In summary, the known systems presume the use by operators with in-depth knowledge of the devices and of the common operations of molecular biology, as well as the in-depth knowledge of the steps for extracting the nucleic acid, for amplifying the extracted nucleic acid and for detecting and interpreting the result.

Therefore, the known systems can only be employed by specialized personnel in suitable laboratories. Indeed, the skills of a specialized operator are required so to have a correct interpretation and validation of the results. Such systems are complex and require long use times. Therefore, the known systems do not allow the execution of genetic analyses in situ.

### SUMMARY OF THE INVENTION

The object of the present invention is to obtain a complete portable system with all the instruments and reagents necessary for the execution of genetic analyses outside of a suitable structure, such as a specialized laboratory.

Further object of the present invention is to obtain a system capable of guiding and monitoring an operator through the execution of all the steps necessary for a genetic analysis.

Further object of the present invention is therefore to obtain a system capable of providing an automatic detection and interpretation of the result.

Further object of the present invention is to obtain a system provided with mechanisms for automatically verifying the correct execution of the activities performed by the operator for the automatic validation of the result.

Further object of the present invention is to obtain a system provided with a remote communication plant for the automatic validation of the result of the genetic analysis executed in situ.

Further object of the present invention is to obtain a method for executing a genetic analysis by means of the use of an apparatus for genetic analyses in the scope of the present invention.

### Advantages of the invention

Due to one embodiment, it is possible to obtain a system for genetic analyses which can be used in situ so to be able to rapidly execute genetic analyses in the field.

Due to a further embodiment, it is possible to obtain a system for genetic analyses which allows a non-specialized operator to be able to autonomously and safely execute genetic analyses.

Due to a further embodiment, it is possible to obtain a method for employing an apparatus for genetic analyses of the present invention, which allows a non-specialized operator to be able to autonomously execute genetic analyses in the field.

### BRIEF DESCRIPTION OF THE DRAWINGS

The characteristics and advantages of the present disclosure will be clearer from the following detailed description of a possible practical embodiment, illustrated by way of a non-limiting example in the set of drawings, in which:

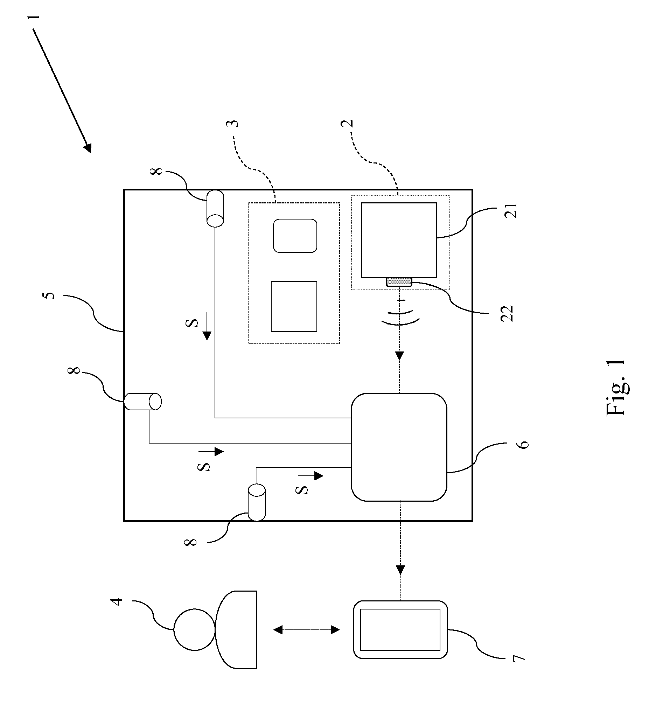

- figure 1 shows a schematic representation of a system according to the present invention,

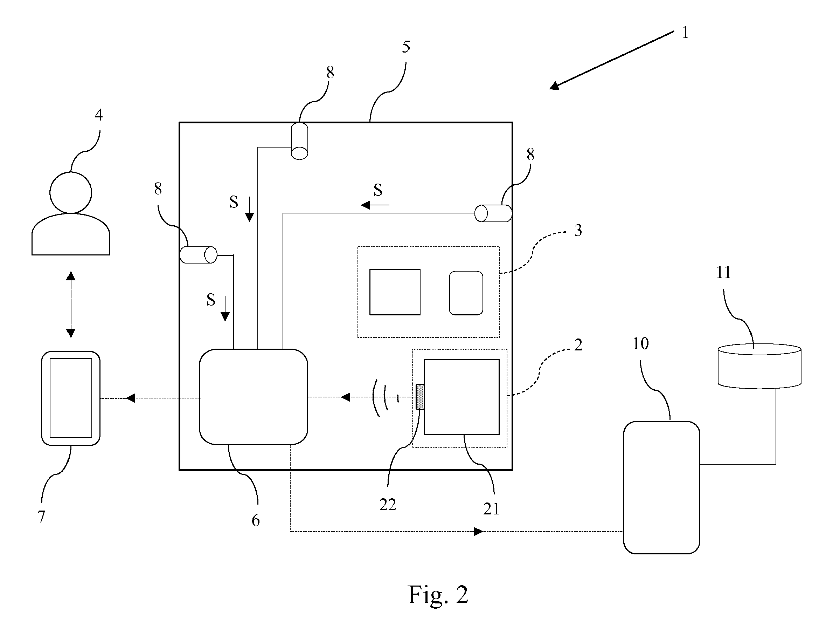

- figure 2 shows a schematic representation of an embodiment of the system of figure 1,

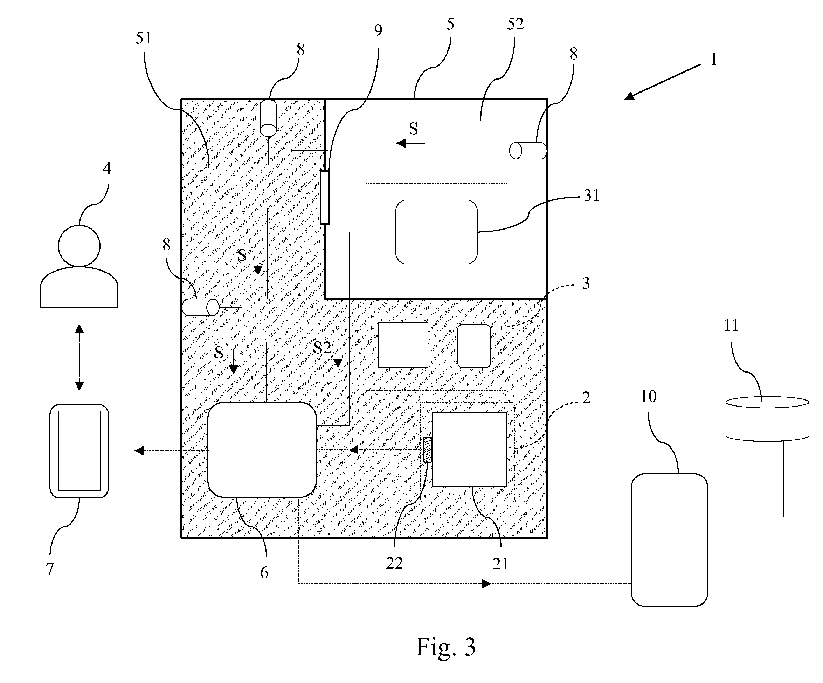

- figure 3 shows a schematic representation of an embodiment of the system of figure 2,

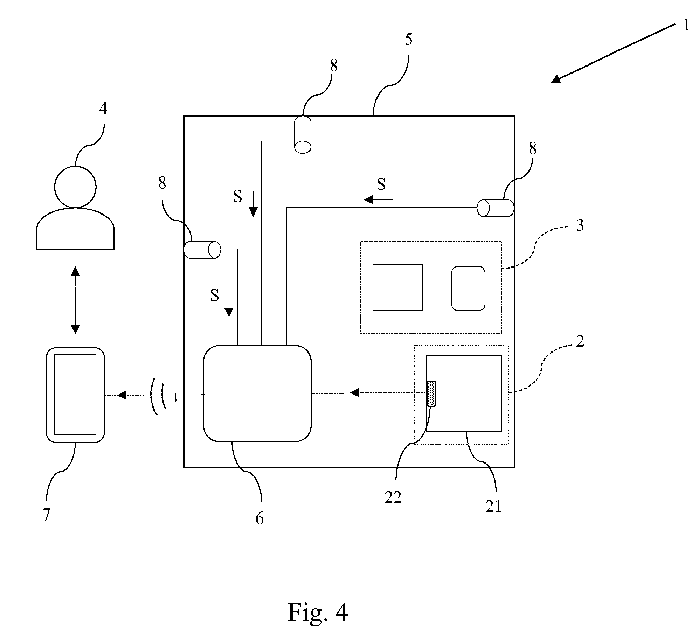

- figure 4 shows a schematic representation of an alternative embodiment of a system according to the present invention.

### DETAILED DESCRIPTION

If not explicitly underlined, the single characteristics described with reference to the specific embodiments must be intended as accessories and/or interchangeable with other characteristics, described in reference to other embodiments.

The object of the present invention is a system 1 for genetic analyses comprising at least one kit 2 for genetic analyses. The kit 2 comprises the reagents necessary for executing a genetic analysis of at least one sample. In particular, each kit 2 comprises one package 21 shaped in order to house such reagents.

The system 1 also comprises a plurality of devices 3 configured for being used by a user 4 for executing the genetic analysis of at least one sample by means of the use of the reagents.

Hereinbelow, for the sake of description brevity, reference will be made in a non-limiting manner to a genetic analysis, like the procedure through which it is possible to obtain a genetic identification of at least one biological sample to be analyzed. In particular, reference will be made to a plurality of steps necessary for executing a genetic analysis, e.g. all the steps necessary for genetically preparing and analyzing at least one sample. The genetic analysis is performed through a plurality of steps, of which there are three obligatory steps for each type of genetic analysis: a) a first step for extracting the nucleic acid (DNA or RNA) from a sample, b) a second step for amplifying the extracted nucleic acid, c) a third step for detecting and interpreting the result.

Hereinbelow, for the sake of description brevity, reference will be made in a non-limiting manner to a kit 2 as a set of reagents, components and raw materials intended for a specific application of genetic analysis (e.g. "kit for the diagnosis of celiac disease", "kit for vine virosis"). In particular, reference will be made to the reagents as the set of all the reagents necessary for executing the genetic analysis, from step a) for extracting the nucleic acid (DNA and RNA) to step c) for detecting the final result. In the case of specific applications, the reagents can also comprise several accessories necessary for preparing the sample (e.g. blade, corer, penknife, nib for maps, columns for purification).

Preferably, the reagents inside the kits 2 are ready for use and disposable so as to exclude crossed and environmental contaminations. Still more preferably, the reagents can be preserved at room temperature and/or at a temperature of about 4°C (e.g. in refrigerator).

Hereinbelow, for the sake of description brevity, reference will be made in a non-limiting manner to a plurality of devices 3 such as the known scientific instrumentation, for laboratory or portable, developed specifically for executing the plurality of steps of genetic analysis. In particular, the plurality of devices 3 comprises for example micropipettes, mini-centrifuges, thermocyclers, florescence detectors, vortex mixtures and benchtop mini-centrifuges.

It should be indicated that it is possible to use a specific kit 2 for a determined genetic analysis. Each time it is desired to perform a new type of genetic analysis, it is necessary to use a specific kit 2. In addition, the plurality of devices 3, that is employed in combination with the kit 2 in each genetic analysis, is substantially the same for each type of genetic analysis.

The system 1 comprises a container 5 shaped for housing at least one kit 2 and the plurality of devices 3 for allowing the execution of the genetic analysis of at least one sample. In addition, the container 5 is accessible by the user 4 in order to allow the latter to be able to execute the genetic analysis inside the same container 5. Advantageously, the container 5 is capable of providing the user 4 with a work setting suitable for executing the genetic analysis.

Each kit 2 comprises an RFID tag (i.e. Radio Frequency Identification) 22 for example stably applied on the package 21 of the kit 2 or inserted in the package 21 of the kit 2. The RFID tag 22 comprises information data stored therein that is representative of a plurality of steps necessary for executing the genetic analysis. Preferably, the RFID tag 22 is associated with a microchip and/or a memory in which the information data is stored. Still more preferably, the RFID tag 22 does not require power supply and comprises a passive RFID antenna. Specifically, the information data is a function of each kit 2 and for example comprises a text file containing the plurality of steps. The information data can also provide information relative to the batch and to the expiry date of the respective kit 2. By way of example, the kit 2 can be considered a package 21 that encloses all the reagents for executing a specific genetic analysis. The RFID tag 22 is applied to the package or is contained therein so to be easily readable by a suitable reader, e.g. by means of NFC (i.e. near field communication) technology. Preferably, the RFID tag 22 is stably applied to the outside of the package 21. Still more preferably, the RFID tag is incorporated in the wall of the package 21.

The system 1 comprises a processing device 6 that is internally arranged with respect to the container 5. The processing device 6 is provided with a graphic interface 7 in order to interact with the user 4 by means of a graphic display. In accordance with a preferred embodiment, the processing device 6 comprises an circuit board capable of managing possible peripheral devices, communication by means of Bluetooth and/or Wi-Fi and can be provided with 256 MB of RAM DDR2, 3 USB ports, LAN port, up to 60 pin GPIO and up to 4 A/D 10 bit converters. Preferably, the graphic interface comprises a user interface such as a tablet PC, a smartphone or a PC in signal communication, via cable or Wi-Fi, with the processing device 6.

The processing device 6 is configured so to be able to read the information data contained in the RFID tag 22. In particular, the at least one kit 2 is placed in the container 5 by the user 4 in a manner such that the processing device 6 can automatically read the information data contained in the RFID tag 22 integrated in the package 21 of the kit 2 or contained therein. Preferably, the graphic interface 7 is capable of displaying the information data contained in the RFID tag 22.

The processing device 6 is configured for receiving the information data stored in the RFID tag 22 in order to associate the information data with the plurality of steps in a manner so as to display the plurality of steps by means of the graphic interface 7. In other words, the processing device 6 is capable of automatically reading the information data stored in the RFID tag 22, in a manner so as to associated the information data with the respective plurality of steps necessary for executing the genetic analysis. In addition, the processing device 6 displays the plurality of steps by means of the graphic interface 7 in a manner such that the user 4 can correctly execute the genetic analysis. Advantageously, the processing device 6, also by means of the graphic interface 7, is capable of step-by-step guiding the user 4 during the execution of the genetic analysis.

In addition, the system 1 comprises at least one sensor 8 that is arranged internally with respect to the container 5 and configured for detecting a first physical quantity relative to the genetic analysis in order to transduce it into a first signal S. Each sensor 8 is in signal communication with the processing device 6 in order to transmit the first signal S. In accordance with a preferred embodiment, the at least one sensor 8 is an optical sensor and/or an acceleration sensor and/or a temperature sensor and/or a pressure sensor and/or a movement sensor and/or a chemical sensor. In other words, each sensor is capable of monitoring a respective first physical quantity associated with the genetic analysis, in order to provide a live monitoring of the genetic analysis being executed. By way of example, an optical sensor is considered that is capable of detecting the level of the solution in a test tube, or a temperature sensor is considered for monitoring the temperature in the container 5, or a chemical sensor is considered for detecting the pH of a solution. In such a manner, physical quantities can be monitored that are relative to the various steps of the genetic analysis in order to detect possible errors committed by the user. In accordance with one embodiment solution, the system 1 comprises a system for eliminating waste (e.g. tips) positioned in the container 5, provided with an optical sensor positioned at the door of the waste container and configured for recognizing the tip elimination event, in order to monitor the plurality of steps carried out by the user 4. In such a manner, it is possible to verify the completed substitution of the pipette tip between one operation and the next, so as to prevent possible contaminations.

The processing device 6 is configured for receiving and processing the first signal S, and as a function of its value it generates - by means of the graphic interface 7 - a first message in order to proceed in the execution of the plurality of steps. In other words, the processing device 6 processes the first signal S received by a respective sensor 8 in a manner so as to identify possible errors of execution committed by the user 4 during the execution of the plurality of steps of the genetic analysis. Therefore, a first message is displayed on the graphic interface 7 in order to authorize the user 4 to proceed in the genetic analysis, continuing in the plurality of steps or repeating the steps compromised by a possible error committed by the user 4. Advantageously, the processing device 6 is capable of monitoring the user 4 during the execution of the plurality of steps of the genetic analysis through the at least one sensor 8, in a manner so as to identify possible errors committed by the user 4. In accordance with a preferred embodiment, the processing device 6, also by means of the graphic interface 7, is capable of clearly and precisely indicating to the user the next step of the genetic analysis that he/she will have to carry out. In such a manner, it is possible to allow a non-specialized user 4 to execute a genetic analysis outside of a certified laboratory, in conditions of complete safety and reliability.

In accordance with a preferred embodiment, the plurality of devices 3 comprises an optical amplification and detection device 31 configured for detecting at least one second physical quantity relative to the genetic analysis in order to transduce it into at least one second signal S2. The optical amplification and detection device 31 is in signal communication with the processing device 6 in order to transmit the at least one second signal S2. Preferably, the processing device 6 is configured for receiving and processing the at least one second signal S2 and, as a function of its value, generating a second message by means of the graphic interface 7. Preferably, the optical amplification and detection device 31 comprises a heating system and an optical and optoelectronic system comprising optical filters and an array of LED or an array of photodiodes for stressing and detecting the fluorescence of the samples to be analyzed. In particular, the optical amplification and detection device 31 is capable of detecting at least two different pairs of wavelengths, for excitation/emission, in order to be able to detect the presence of the genetic sequence that is intended to be identified by means of the genetic analysis. Therefore, as a function of the detected wavelength values (i.e. second physical quantity), the optical amplification and detection device 31 generates the at least one second signal S2. Finally, the processing device 6 is configured for receiving and processing the second signal S2 in order to display the second message on the graphic interface 7. Preferably, the second message contains the data relative to the results, positive or negative, of the genetic analysis. In one embodiment, the optical amplification and detection device 31 is configured so to be able to execute step b) for amplifying the extracted nucleic acid and step c) for detecting and interpreting the result of the genetic analysis.

In accordance with a preferred embodiment, the optical amplification and detection device 31 is configured for processing the at least one second signal S2 and for displaying the second message by means of the graphic interface 7.

In accordance with a preferred embodiment, the container 5 comprises a first zone 51 and a second zone 52 separated from the first zone. The first zone 51 is shaped in order to house at least one kit 2 for allowing the execution of the genetic analysis of at least one sample. The second zone 52 is shaped in order to house at least the optical amplification and detection device 31. By way of example, the first zone 51 is considered as a part of the container 5 intended to allow the execution of step a) for extracting the nucleic acid from a sample and of step b) for amplifying the nucleic acid extracted in step a). In other words, all the devices of the plurality of devices 3 necessary for executing steps a) and b), by means of the use of at least one kit 2, are present in the first zone 51. In the second zone 52, however, all the devices of the plurality of devices necessary 3 for completing step b), and for executing step c) for detecting and interpreting the result, are present.

Preferably, the first zone 51 is separated from the second zone 52 by at least one wall which comprises at least one door 9 adapted to allow the user 4 to be able to access the second zone 52 in order to move at least one sample from the first zone 51 to the second zone 52. In a preferred embodiment, the door 9 comprises an oscillating door which allows being able to move at least one sample only from the first zone 51 to the second zone 52. In such a manner, it is possible to prevent possible contaminations of the samples present in the first zone 51 in the course of the genetic analysis.

In accordance with a preferred embodiment, the optical amplification and detection device 31 is configured for recognizing if the at least one second signal S2 is free of errors deriving from an incorrect execution of the genetic analysis by the user 4.

In accordance with a preferred embodiment, the processing device 6 is in signal communication with a remote control unit 10 positioned outside the system 1 in order to transmit the information data and/or the first signal S. In detail, the remote control unit 10 is configured for receiving and storing the information data and/or the first signal S in a database 11 associated therewith. Advantageously, the remote control unit 10 stores, in the database 11, all the data relative to the genetic analysis and in particular data relative to the signals detected by the sensors 8 arranged in the container 5 of the system 1.

In accordance with a preferred embodiment, the plurality of sensors 8 comprises at least one video camera in signal communication with the processing device 6 in order to transmit a plurality of video data associated with the genetic analysis. The processing device 6 is configured for receiving the plurality of video data and for transmitting it to the remote control unit 10, which in turn is configured for receiving the plurality of video data and for storing it in the database 11. Advantageously, the remote control unit 10 preserves all the video data (i.e. a film) regarding the genetic analysis, in a manner so as to maintain an accurate record of all the steps performed by the user 4 inside the container 5 of the system 1.

In accordance with a further preferred embodiment, the remote control unit 10 is configured for receiving and processing at least one second signal S2. Advantageously, the remote control unit 10 allows being able to carry out a second monitoring of the analysis executed by the user 4 by means of the system 1.

In accordance with a preferred embodiment, the system 1 is shaped for being manually transportable by a user 4 and has a weight less than 15 kilograms, in order to allow the user 4 to be able to carry out a genetic analysis directly at the place of interest. Preferably, the container 5 has the shape of a rectangular parallelepiped. Still more preferably, the container 5 has the spatial bulk of a rectangular parallelepiped with maximum length, width and height respectively equal to 60 cm, 40 cm and 40 cm. In accordance with a preferred embodiment, the container 5 is shaped for housing all the components of the system 1 at its interior, in a manner so as to allow the easy transport thereof. Of course, the container 5 can be made of different shapes and sizes, so as to have a spatial bulk equivalent to or compatible with that reported above. In addition, the container 5 is shaped so to be able to house the components of the system 1 therein and to allow the user 4 to be able to carry out a genetic analysis. It should be indicated that the system 1 has a limited weight and a reduced bulk. Hence it can be placed, for example, in a normal suitcase or handbag such that it can be easily raised and translated by a user during transport, in order to allow the user to be able to carry out the genetic analysis in situ. Hereinbelow, for the sake of description brevity, reference will be made in a non-limiting manner to a genetic analysis in situ as a genetic analysis carried out in the field, i.e. in the specific place where it is intended to perform a genetic analysis in a quick, timely manner, and outside a specialized laboratory. A place where it is possible to carry out the genetic analysis in the field is for example the plant of an agribusiness, a medical - veterinary clinic, customs offices or a pharmacy. In accordance with a preferred embodiment, the system 1 can be contained in a suitcase or bag or similar container in order to allow the user 4 to be able to transport the entire system 1 to the place where one intends to perform a genetic analysis. Advantageously, the user 4 can transport the system 1 to a farm site, company, medical or veterinary clinic and generally to a place where it is desired to execute a genetic analysis in situ.

In accordance with a further preferred embodiment, the system 1 comprises a UV radiation generator with germicide action adapted to sterilize the first zone 51 and/or the second zone 52 of the container 5.

In accordance with a preferred embodiment, the processing device 6 is configured for automatically identifying the operator 4 by means of identification codes, badge or radio frequency bracelets. In such a manner, only the authorized operators are able to use the system 1.

In accordance with a preferred embodiment, the system 1 comprises a system for power supplying from electricity mains or autonomously (e.g. power supply by means of rechargeable batteries or by means of a solar energy power supply system). Preferably, the power supply system is able to power supply each electronic device present within the container 5.

In accordance with a preferred embodiment, each system 1 of a plurality of systems 1 that are separate and independent from each other, each used by a respective user 4, comprise respective processing units 5, all in signal communication with a single remote control unit 10, and therefore with the database 11. Advantageously, the database 11 is the data collection point in order to allow the verification even after the result of the genetic analyses, while the portable systems 1 act as remote work stations, creating an integrated network.

In accordance with a preferred embodiment, each sample to be analyzed comprises an RFID tag containing data relative to the sample, and the processing device 6 is configured in order to read the data relative to the sample in order to display a third message by means of the graphic interface 7. The third message preferably comprises information relative to the sample.

The present invention also regards a method for executing a genetic analysis by means of a system 1 of the described type.

The method comprises a step in which the processing device 6 automatically reads the information data stored in the RFID tag 22 present on the package 21 of the kit 2 or contained at its interior, and displays the plurality of steps by means of the graphic interface 7. In accordance with a preferred embodiment, this step is initiated when the user 4 inserts at least one kit 2 in the container 5, or alternatively following a step in which the user 4 activates the processing device 6 when it is identified by means of the graphic interface 7, by inserting an identification code or by using a badge or by using a radiofrequency bracelet. In an alternative embodiment, a start button is provided that is able to activate the processing device 6 and the entire system 1. Advantageously, the processing device 6 automatically recognizes the type of kit 2 by reading the information data contained in the RFID tag 22, and consequently the type of genetic analysis to be carried out. In such a manner, it associates the information data with the plurality of steps of the genetic analysis and displays, on the graphic interface, the plurality of steps that the user 4 must carry out in order to complete the genetic analysis of at least one sample. Still more advantageously, the processing device 6, also by means of the graphic interface 7, is able to indicate, step-by-step, to the user the steps that he/she must perform for the execution of the genetic analysis. It should be indicated that a non-specialized user 4 is able to execute a genetic analysis by means of the use of the system 1, by following the instructions displayed on the graphic interface 7 of the system 1.

The method comprises a step in which the processing device 6 processes at least one signal S received by at least one sensor 8 and displays the first message by means of the graphic interface 7 as a function of the first signal S. In other words, the processing device 6 receives at least one first signal S as a function of a physical quantity relative to the genetic analysis, and processes such first signal S in a manner so as to display a first message by means of the graphic interface 7. Such message is aimed to provide the user 4 with a feedback on the steps that he/she is executing, so as to inform him/her of the presence of possible errors in the execution of the genetic analysis. In such a manner, if an error is detected in a step of the genetic analysis, the user 4 is informed by means of the first message. In accordance with a preferred embodiment, the processing device 6, also by means of the graphic interface 7, is able to clearly and precisely indicate to the user the next step of the genetic analysis that he/she must perform. It should be recalled that the first message also comprises information on the steps that the user 4 must execute in order to proceed in the genetic analysis following an error detected by the processing device 6 by means of the sensors 8. Advantageously, the user is placed in the condition so that he/she can repeat the steps in which errors of execution have been detected, so to be able to correctly execute the genetic analysis. It should be indicated that a non-specialized user 4 can employ the system 1 for executing a genetic analysis in a safe and reliable manner due to the functioning principle of the processing device 6.

Preferably, the method comprises a step in which the processing device 6 processes at least one second signal S2 received by the optical amplification and detection device 31, in order to generate the second message as a function of the second signal S2.

In accordance with a preferred embodiment, the method comprises a step in which the system 1 recognizes if the at least one second signal S2 is affected by errors deriving from an incorrect execution of the genetic analysis by the user 4.

The method also comprises a step in which the processing device 6 displays the second message by means of the graphic interface 7. In such a manner, the user 4 can automatically display the results of the genetic analysis contained in the second message.

In accordance with one embodiment, the method comprises a step in which the processing device 6 transmits (e.g. by means of a wired Internet connection or Wi-Fi) the information data and/or the first signal S and/or the second signal S2 to the remote control unit 10. Advantageously, it is possible to carry out a further remote monitoring of the genetic analysis by a remote control unit 10 associated, for example, with a specialized laboratory capable of validating the genetic analysis executed by the non-specialized user 4 by means of the system 1.

In accordance with a preferred embodiment, the method comprises a step in which the processing device 6 transmits the plurality of video data collected by the video camera to the remote control unit 10 which in turn stores it in the database 11. In such a manner, all the genetic analysis executed by the user 4 by means of the system 1 can be controlled, even afterwards, by viewing the videotape of the genetic analysis obtained with the video camera integrated in the container 5.

Advantageously, the remote control system 10 can be associated with a certified central laboratory (e.g. ISO 17025), provided with specialized personnel, whose task is that of remotely monitoring the operations carried out in situ by the non-specialized user 4, validating the results of the genetic analysis and ensuring the correct execution thereof.

In accordance with a preferred embodiment, the processing device 6 activates a UV radiation generator with germicide action adapted to sterilize said first zone 51 and/or said second zone 52. Preferably, such step is executed at the end of each genetic analysis. Such UV radiation generator is maintained active for a time period suitable for obtaining an acceptable sterilization of the container 5. Advantageously, the container 5 of the system 1 offers a suitable setting for the execution of the genetic analysis.

Hereinbelow, a possible system 1 embodiment is reported, with particular attention to the description of the components necessary for executing the genetic analysis within the container 5.

### Example 1

The first zone 51 comprises a plurality of devices 3, including:
- a centrifuge capable of reaching 13000 rpm, able to house 1.5ml test tubes and strip with 12 0.2ml tubes, for example comprising a direct current electric motor. The position of the test tubes and of the strips is tilted with respect to the rotation axis by an angle of about 45 degrees, in order to allow the correct centrifugation of the samples;
- a vortex mixture with speed variable from 600 to 4000 rpm, coupled by means of a non-centered orbit of about 3-4mm to a test tube rack shaped so as to effectively mix a strip with 12 0.2ml test tubes and 1.5ml test tubes;
- a refrigerator, constituted by a passive unit previously cooled to the temperature of -20 °C, which, due to a high thermal capacity and an effective thermal insulation with respect to the outside, allows maintaining the reagents at a temperature less than 0°C for a time of at least 6 hours;
- a support for preparing the PCR mix, designed for housing 8 strips with 12 0.2ml tubes and 1.5ml test tubes; the support is provided with optical level reader, for automatically verifying the correct quantity of liquid dispensed inside the tubes and test tubes;
- an extraction center, constituted by a block of aluminum maintained at controlled temperature (e.g. adjustable between 30 °C and 98 °C), designed for housing 12 1.5ml test tubes and with a sensor for attaining the preprogrammed temperature based on the type of genetic analysis to be executed. The internal temperature of the block is measured for example by means of thermistor placed inside the block connected with an A/D converter, which measures the resistance thereof in real time. The resistive heater is controlled by means of PWM modulated by a temperature compensation algorithm, using the real time reading of the thermistor as feedback;
- a set of adjustable 10, 20, 200 and 1000 microliter micropipettes, set on a suitable support.

In addition, the second zone 52 comprises a plurality of devices 3, including:
- an amplifier and reader, shaped for housing a strip with 12 0.2ml test tubes in a heater at the amplification temperature (comprised between 30 °C and 98 °C), in turn integrated in an optical and optoelectronic system (e.g. based on LED array, arrays of photodiodes and optical filters) for stressing and detecting the fluorescence (for example, of two different pairs of wavelengths for excitation/emission);

The kit 2 comprises reagents including:
- solutions stable at room temperature which allow the extraction of the nucleic acid, by means of chemical lysis, starting from small sample quantities and in a few minutes time. Advantageously, this system allows reducing the operative times with respect to the extraction kits currently present on the market. Advantageously, the use of solutions stable at room temperature ensures the preservation at + 4°C and the sending at room temperature.
- 0.2 ml PCR strips containing primers in lyophilic and Taq mix formulation containing all the reagents necessary for the execution of step b) for amplifying the nucleic acid (e.g. Taq polymerase, reaction buffer, magnesium chloride, deoxynucleotides). Advantageously, the use of lyophilized primers ensures a greater stability of the reagents and allows the preservation thereof at + 4°C and the sending at room temperature. In addition, the at least one kit 2 comprises all the reagents necessary for executing the genetic analysis and such reagents are ready for use in order to allow standardizing, speeding up and simplifying all the operative steps, which would otherwise require a preliminary step of preparation of the single reagents with the risk of contamination and errors being committed by a non-specialized user 4.

The technology employed for executing step b) for amplifying the nucleic acid comprises:
- the technology LAMP (Loop Mediated Isothermal Amplification), which is a type of PCR that allows obtaining numerous copies of DNA by using a single reaction temperature, due to the use of a specific enzyme (i.e. Bst polymerase). With respect to the conventional gene amplification techniques, the LAMP is much quicker and simpler to execute, in addition to having lower costs both for reagents and instruments necessary for the analysis. This technology is adapted for the rapid execution of genetic analyses, without the use of particular laboratory instruments and without requiring specialized personnel.

Reported hereinbelow is an example of application of the system 1 with reference to the plurality of steps necessary for the execution of the genetic analysis:
- the processing device 6 automatically recognizes an operator by means of the use of a badge or a radio frequency bracelet and turns on the system 1;
- the processing device 6 automatically reads the RFID tag 22 applied to the kit 2 and recognizes the type of genetic analysis to be carried out, the batch and the expiry date of the kit 2;
- the processing device 6 starts the videotaping of the operations by means of video camera and activates the sensors 8 present in the container 5;
- the processing device 6 starts the graphic interface 7 of a tablet that manages and guides the operator through the execution of the following plurality of preprogrammed steps:
   - insertion of the sample in the first zone 51 and recognition of the sample to be analyzed by the processing unit 6, through the use of radiofrequency labels;
   - preparation of the sample;
   - execution of step a) for extracting the nucleic acid;
   - preparation of the amplification mix;
   - resuspension of the lyophilic reagents of the strip by means of vortex mixture;
   - centrifugation of the strip by means of mini-centrifuge;
   - movement of the sample from the first zone 51 to the second zone 52, execution of step b) for amplifying the nucleic acid extracted in step a) and step c) for detecting the results of the genetic analysis;
- the processing device 6 executes an automatic interpretation of the results that are displayed by means of the graphic interface 7;
- the processing device 6 stores and sends the results of the genetic analysis to the remote control unit 10;
- the processing device 6 stores and sends the plurality of recorded video data to the remote control unit 10;
- the processing device 6 turns on the UV lamp for a predefined time and consequently turns off the system 1.

Advantageously, by means of the use of a system 1, it is possible for non-specialized personnel to carry out genetic analyses in situ or in places other than molecular biology laboratories, ensuring by means of processing device 6 and a remote control unit 10 the validation of the result of the genetic analyses. In addition, the system 1 allows obtaining genetic analyses in the field with the same quality of those obtained in the laboratory and can be easily transported with complete safety, due to the limited size and weight. Therefore, a non-specialized user 4 is able to execute genetic analyses with high reproducibility and reliability by using the system 1 for genetic analyses.

Of course, for the purpose of meeting specific and contingent requirements, a man skilled in the art can make numerous modifications and variants, all contained within the protective scope as defined by the following claims.

## Claims

1. System (1) for genetic analyses comprising:
- at least one kit (2) for genetic analyses, said at least one kit comprising reagents for executing a genetic analysis of at least one sample, said at least one kit (2) comprising one package (21) shaped in order to house said reagents,
- a processing device (6) arranged inside said container (5) and provided with a graphic interface (7) in order to interact with said user (4) by means of a graphic display,
- a plurality of devices (3) configured for being used by a user (4) for executing said genetic analysis of said at least one sample by means of the use of said reagents, said plurality of devices (3) comprising an optical amplification and detection device (31) configured for detecting at least one second physical quantity relative to said genetic analysis and for transducing said second physical quantity into at least one second signal (S2), said optical amplification and detection device (31) is in signal communication with said processing device (6) in order to transmit said at least one second signal (S2), said processing device (6) is configured for receiving and processing said at least one second signal (S2) and as a function of the value of said at least one second signal (S2) said processing device (6) generates a second message by means of said graphic interface (7),
- a container (5) shaped for housing said at least one kit (2) and said plurality of devices (3) for allowing the execution of said genetic analysis of said at least one sample, said container (5) being accessible by said user (4),
**characterized in that:**
- said at least one kit (2) comprises an RFID tag (22) stably applied on said package (21) or contained therein, said RFID tag (22) comprising stored information data representative of a plurality of steps necessary for executing said genetic analysis, said information data being a function of said at least one kit (2),
- said container (5) comprises a first zone (51) and a second zone (52) separated from said first zone, said first zone (51) being shaped in order to house said at least one kit (2) for allowing the execution of said genetic analysis of said at least one sample, said second zone (52) being shaped in order to house said optical amplification and detection device (31),
**and in that it comprises:**
- at least one sensor (8) arranged inside said container (5), said at least one sensor (8) comprising an optical sensor and/or an acceleration sensor and/or a temperature sensor and/or a pressure sensor and/or a movement sensor and/or a chemical sensor, in which
- said at least one sensor (8) is configured for detecting a first physical quantity relative to said genetic analysis and for transducing said first physical quantity into a first signal (S), said at least one sensor (8) being in signal communication with said processing device (6) in order to transmit said first signal (S),
- said processing device (6) is configured for receiving said stored information data in said RFID tag (22) in order to associate said information data with said plurality of steps in a manner so as to display said plurality of steps by means of said graphic interface (7),
- said processing device (6) is configured for receiving and processing said first signal (S) and as a function of the value of said first signal (S) said processing device (6) generates, by means of said graphic interface (7), a first message in order to proceed in the execution of said plurality of steps.

2. System (1) in accordance with claim 1, wherein said first zone (51) is separated from said second zone (52) by at least one wall, said at least one wall comprising at least one door (9) adapted to allow said user (4) to be able to access said second zone (52) in order to move said at least one sample from said first zone (51) to said second zone (52).

3. System (1) in accordance with any one of the preceding claims, wherein
- said processing device (6) is in signal communication with a remote control unit (10) positioned outside said system (1) in order to transmit said information data and/or said first signal (S), said remote control unit (10) being configured for receiving and storing said information data and/or said first signal (S) in a database (11).

4. System (1) in accordance with any one of the preceding claims, wherein
- said plurality of sensors (8) comprises at least one video camera in signal communication with said processing device (6) in order to transmit a plurality of video data associated with said genetic analysis,
- said processing device (6) is configured for receiving said plurality of video data and for transmitting said plurality of video data to said remote control unit (10),
- said remote control unit (10) is configured for receiving said plurality of video data and for storing said plurality of video data in said database (11).

5. System (1) accordance with any one of the preceding claims, shaped for being manually transportable by said user (4) and having a weight less than 15 kilograms, in order to allow said user (4) to be able to conduct said genetic analysis in situ.

6. System (1) in accordance with any one of the preceding claims, comprising a UV radiation generator with germicide action adapted to sterilize said first zone (51) and/or said second zone (52).

7. Method for executing a genetic analysis by means of a system (1) in accordance with claims 1 to 9, comprising the steps of:
a1) reading said stored information data in said RFID tag (22) and displaying said plurality of steps by means of said graphic interface (7);
a2) processing said at least one signal (S) and displaying said first message by means of said graphic interface (7) as a function of said first signal (S);
a3) displaying said second message by means of said graphic interface (7).
